(19) Europäisches Patentamt
European Patent Office
Office européen des brevets

(11) Publication number: **0 257 554 B1**

# (12) EUROPEAN PATENT SPECIFICATION

(45) Date of publication of patent specification: **24.03.93**

(51) Int. Cl.5: **C09K 11/67**, C09K 11/59, H01J 61/44, H01J 61/48, C09K 11/02

(21) Application number: **87112055.6**

(22) Date of filing: **19.08.87**

## (54) Phosphor particle, phosphor blend, and fluorescent lamp.

(30) Priority: **29.08.86 US 902252**

(43) Date of publication of application: **02.03.88 Bulletin 88/09**

(45) Publication of the grant of the patent: **24.03.93 Bulletin 93/12**

(84) Designated Contracting States: **DE FR GB NL SE**

(56) References cited:
**EP-A- 0 160 856**
**DE-A- 2 450 435**
**US-A- 4 039 889**

**DERWENT ABSTRACTS; & JP-A-52 022 580 (FUJITSU LTD)**

**DERWENT ABSTRACTS; & JP-A-52 022 583 (FUJITSU LTD)**

**DERWENT ABSTRACTS; & JP-A-52 022 584**

**DERWENT ABSTRACTS; & JP-A-52 022 585**

(73) Proprietor: **GTE PRODUCTS CORPORATION**
**100 Endicott Street**
**Danvers, MA 01923(US)**

(72) Inventor: **Chenot, Charles F.**
**RD No. 3**
**Towanda, PA 18848(US)**
Inventor: **Minnier, Henry B.**
**RD No. 2**
**Dushore, PA 19614(US)**
Inventor: **Taubner, Fred R.**
**5 Seneca Drive**
**Danvers, MA 01923(US)**
Inventor: **Sigai, A. Gary**
**8 Fifer Lane**
**Lexington, MA 02173(US)**

(74) Representative: **Patentanwälte Grünecker, Kinkeldey, Stockmair & Partner**
**Maximilianstrasse 58**
**W-8000 München 22 (DE)**

EP 0 257 554 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This Application is related to the application of C.F. Chenot and H.B. Minnier for "Improved Zinc Orthosilicate Phosphor", filed on even date herewith.

The invention relates to a phosphor particle having the features of the generic clauses of Claim 1 and 19, a phosphor blend having the features of the generic clauses of Claim 6 and 21, a fluorescent lamp having the features of the generic clauses of Claims 13, 14, 28 and 29, and the use of said phosphor particles and said phosphor blend in a fluorescent lamp.

Manganese-activated zinc orthosilicate phosphor ($Zn_2SiO_4$:Mn) is a green-emitting phosphor. One of the problems associated with $Zn_2SiO_4$:Mn is its relatively poor fluorescent lamp performance and maintenance. Poor maintenance means that the light output, or lumens per watt, of the phosphor decreases to a greater extent during lamp life than is desirable. Because of its relatively poor fluorescent lamp maintenance, $Zn_2SiO_4$:Mn phosphor has been generally found to be untuitable for use as a green-emitting phosphor in commercially available fluorescent lamps. Heretofore, commercially available fluorescent lamps which include green-emitting phosphors have typically employed expensive rare earth green-emitting phosphors, such as cerium terbium magnesium aluminate.

The importance of high-performance, green-emitting phosphors with low depreciation characteristics in fluorescent lamps has increased in recent years with the growing demand for high CRI performance lamps. For that reason a fluorescent lamp including a less expensive high-maintenance green-emitting phosphor is desirable.

It is therefore the object of the invention to provide a less-expensive high-maintainance green-emitting phosphor, a white-emitting phosphor blend comprising said phosphor, and a fluorescent lamp comprising said phosphor or said phosphor blend.

This object is solved by a phosphor having the features of Claims 1 and 19, a phosphor blend having the features of Claims 6 and 21, and a fluorescent lamp having the features of Claims 13, 14, 28 and 29.

Preferred embodiments are disclosed in the dependent claims.

In the drawings:

FIGURE 1 is a diagrammatic elevational view of a fluorescent lamp.

FIGURE 2 graphically represents lumen output as a function of time for a lamp test series, including lamps in accordance with the present invention.

FIGURE 3 illustrates the CIE 1976 UCS Chromaticity Diagram.

For a better understanding of the present invention, together with other and further objects, advantages and capabilities thereof, reference is made to the following disclosure and appended claims in connection with the above-described drawing.

In accordance with the present invention, it has been found that particles of manganese-activated zinc orthosilicate phosphor having the empirical formula:

$$Zn_{(2.00-x-y)}Mn_xSiO_{(4.00-y)}(WO_3)_z$$

wherein

$0.04 \leqq x \leqq 0.15$;
$0 \leqq y \leqq 0.05$; and
$0 \leqq z \leqq 0.002$

which have been individually and continuously coated with a conformal aluminum oxide coating having the above thickness provide a green-emitting phosphor material having maintenance and lumen characteristics suited for use in fluorescent lamps and phosphor blends.

The phosphor particle substrate of the present invention is the substantially stoichiometric manganese-activated zinc orthosilicate phosphor which is the subject of U.S. Patent Application of C.F. Chenot and H.B. Minnier filed on even date herewith. The phosphor substrate includes the following elements in the specified weight percent ranges:

zinc, from 54.06% to 57.60% by weight;
silicon, from 12.60% to 12.93% by weight;
manganese, from 0.98% to 3.79% by weight;
tungsten, from 0% to 0.169% by weight; and
oxygen, from 28.76% to 29.10% by weight (by difference).

The phosphor substrate can also be defined and identified by its cation composition. The cation composition of the substantially stoichiometric manganese-activated zinc orthosilicate phosphor substrate of the present invention comprises:

a zinc concentration from 54.06% to 57.60% by weight;

a silicon concentration from 12.60% to 12.93% by weight,

a manganese concentration from 0.98% to 3.79% by weight, and

a tungsten concentration from 0% to 0.169% by weight.

The term "cation", as used to describe elements present in the phosphor substrate, means the elements present in the phosphor substrate other than oxygen.

These compositional limits can also be defined in terms of the empirical formula:

$Zn_{(2.00-x-y)}Mn_xSiO_{(4.00-y)}(WO_3)_z$

wherein:

$0.04 \leqq x \leqq 0.15$;
$0 \leqq y \leqq 0.05$;
$0 \leqq z \leqq 0.002$.

In the formulation, the nonstoichiometry parameter (y) has been limited to only a small deviation from the ideal stoichiometry of (Zn + Mn)/Si = 2.00, i.e., from 1.95/l to 2.00/l At the prescribed upper limit of y = 0.05, the amount of excess silica ($SiO_2$) computes to less than 0.7 weight percent, which is a reasonable tolerance keeping the negative feature of excess silica to a minimum. As used herein, "substantially stoichiometric" describes a phosphor in which the nonstoichiometry parameter y is greater than or equal to zero and less than or equal to 0.05. Preferably, the nonstoichiometry parameter (y) is greater than or equal to zero and less than or equal to 0.03. Most preferably, y equals zero, signifying the ideal stoichiometry of (Zn + Mn)/Si = 2.00.

Tungsten, in the form of $WO_3$, can optionally be incorporated into the zinc silicate phosphor substrate of the present invention. The $WO_3$ addition is represented by the parameter z in the empirical formula. The amount of $WO_3$ per formula unit is greater than or equal to zero and less than or equal to 0.002 mole.

The manganese concentration (x) is varied over a range of from 0.04 to 0.15 moles per formula unit, which range includes the concentration resulting in optimum luminescence performance. Optimum luminescence has been demonstrated for phosphor compositions in which x is from 0.11 to 0.12 by intrinsic powder fluorescence evaluation and by actual lamp evaluation in 40 Watt T12 fluorescent lamps.

Except for the manganese contents, which were in accordance with the values reported in Table I, the phosphor compositions used to obtain the data reported in Table I were otherwise formulated and prepared by a method similar to the method described in Example III.

In Table I, comparison is made between the calculated weight % Mn concentration for an Mn concentration series and the actual Mn concentration determined by postfiring quantitative analysis. The close parallel of these data indicates that the final composition is accurately represented by the empirical formula.

TABLE I

| Value of x | Calculated wt% Mn | Analyzed wt% Mn |
|---|---|---|
| 0.0457 | 1.13 | 1.2 |
| 0.0575 | 1.42 | 1.5 |
| 0.0724 | 1.79 | 1.7 |
| 0.0911 | 2.26 | 2.2 |
| 0.1147 | 2.84 | 2.8 |
| 0.1444 | 3.58 | 3.5 |

The empirical formula of a preferred phosphor composition for use as a substrate in the present invention is one in which $0.11 \leqq x \leqq 0.12$, $0 \leqq y \leqq 0.03$, and $z = 0.001$.

The above-described preferred phosphor composition comprises the following cation composition:

zinc, from 55.13 to 55.68 percent by weight;
manganese, from 2.72 to 3.01 percent by weight;
silicon, from 12.66 to 12.81 percent by weight; and
tungsten, from 0.0828 to 0.0838 percent by weight.

The oxygen content of the above-described preferred composition, determined by difference, is from about 28.86 to 28.97 percent by weight.

The synthesis of the improved willemite is dominated by a substantially stoichiometric formulation; a predetermined admix of $NH_4Cl$ and $NH_4F$ salts at a ratio adjusted to achieve the desired particle growth and clarity (definition); a closed container, for example, an alumina crucible fitted with a relatively tightly fitted alumina lid, or similar closed refractory reaction vessel; a single step heat treatment in an inert gas furnace atmosphere; and a final mill/wash treatment of the phosphor in a weak citric acid.

Preferably, the single step heat treatment includes a rapid heat-up profile. While not wishing to be bound by theory, it is believed that a rapid heat-up profile promotes and assists the proposed vapor transport mechanism of the present method. Advantageously, the heat-up profile should be sufficiently fast for reaction to occur between the reactants in the gaseous state. If the heat-up profile is too slow, the gaseous reactants may dissipate from, or leave the reaction vessel before the desired reaction occurs. If, alternatively, the heat-up profile is too fast, the reaction container may undergo structural deterioration, such as, cracking, and the like. Preferably, the heat-up time for a temperature increase of, for example, from 700 to 1250 °C, is in the range of from 30 minutes to 1 hour.

In other words, as used herein, a rapid heat-up profile calls for heating the reactants within the closed container at a temperature rate sufficient for reaction to occur between the gaseous reactants before gaseous reactants diffuse out of the closed container.

The preparation of the phosphor includes the use of strategic amounts of ammonium halide salts, namely: ammonium chloride ($NH_4Cl$) and ammonium fluoride ($NH_4F$), in combination with covered refractory reaction vessels, and an inert furnace atmosphere. Preferably, a slow dynamic flow of nitrogen gas is employed in the furnace, e.g., a linear flow rate from 0.2 to 0.5 liters nitrogen per minute per $cm^2$ (i.e., from 200 to 500 cm/min.)

While not wishing to be bound by theory, the reaction mechanism involving ammonium halide salts is believed to promote and assist the formation of an $MnSiO_3$ intermediate via a vapor transport mechanism, as demonstrated below:

$$1.9\ ZnO + SiO_2.xH_2O + 0.1\ MnCO_3 \longrightarrow (Zn, Mn)_2SiO_4 \quad (1)$$

W

$$ZnO + SiO_2.xH_2O + MnCO_3 \longrightarrow$$

SOLID STATE DIFFUSION

$$ZnO + MnSiO_3 + SiO_2 \longrightarrow (Zn, Mn)_2\ SiO_4$$

(2)

$$ZnO + SiO_2.xH_2O + MnCO_3 + NH_4Cl \longrightarrow$$

VAPOR TRANSPORT

$$ZnO + MnCl_{2(g)} + SiO_2 \qquad ZnO + MnSiO_3 + SiO_2 \longrightarrow (Zn, Mn)_2\ SiO_4 \quad (3)$$

$$ZnO + SiO_2.xH_2O + MnCO_3 + NH_4F \longrightarrow$$

FLUX ACTION

$$ZnO + MnO + SiF_{4(g)} + SiO_2 \qquad ZnO + MnSiO_3 + SiO_2 \longrightarrow (Zn, Mn)_2\ SiO_4 \quad (4)$$

Equation (1) represents the overall reaction for formation of the phosphor for use as a substrate in the present invention. Equations (2)-(4) demonstrate the steps of the reaction mechanism involved in the foregoing method. (Equations (2)-(4) are not balanced.)

The ammonium halide additions perform various functions. The ammonium chloride and ammonium fluoride purge the crucible load of air and/or $O_2$, thereby preserving manganese as a divalent ion. The ammonium chloride causes rapid vapor transport of Mn; enhances the overall reaction, maintains the divalent Mn ion; and causes limited particle growth or fluxing action. The ammonium fluoride causes some vapor transport of manganese and severe fluxing action, resulting in significant particle growth. The use of ammonium chloride in combination with very small amounts of ammonium fluoride provides controlled particle growth with high reactivity.

The concentration range of the ammonium halide additions to the unfired formulations are summarized as follows:

$0 < \text{wt\%}\ NH_4Cl \leqq 2.0$

0 < wt% $NH_4F$ ≦ 0.2.

Amounts of $NH_4Cl$ from 0.5 to 1.0 weight percent and of $NH_4F$ from 0.02 to 0.06 weight percent are considered optimum to achieve high-performance zinc silicate phosphor with a preferred particle size in the range of 5 ≦ FSSS ≦ 6. (FSSS is the abbreviation for Fisher Sub-Sieve Size; FSSS units are designated in micrometers.)

Examples of the particle size variation and control as a function of the ammonium halide additions are shown in Table II. (With the exception of the amount of $NH_4Cl$ and $NH_4F$ used, which were in accordance with the values reported in Table II, the phosphor compositions of samples C, E, and F were otherwise formulated and prepared by a method similar to that described in Example III.)

TABLE II

| Sample | Wt% $NH_4Cl$ | Wt% $NH_4F$ | Typical Particle Size (FSSS) |
|---|---|---|---|
| A | 0.5 | 0 | 2.5-3.0 without W |
| B | 0.5 | 0 | 3.6-5.2 with W |
| C | 0.475 | 0.025 | 6.0 with W |
| D | 0.45 | 0.05 | 6.7 with W |
| E | 0.40 | 0.10 | 8.7 with W |
| F | 0.35 | 0.15 | 8.7 with W |

The following Examples are given to further illustrate the preparation of the substantially stoichiometric manganese-activated zinc orthosilicate phosphor substrate. These Examples are intended merely as being illustrative and representative of the method by which the phosphor substrate can be prepared.

EXAMPLE I

This example is directed to the preparation of improved manganese-activated zinc orthosilicate, as represented by Sample A in Table II, employing $NH_4Cl$ as the only ammonium halide addition to the starting formulation.

The following starting materials were used in the present example. The relative mole amounts (i.e., the moles per formula unit) and corresponding numbers of grams per batch for each of the starting materials are as follows:

| | Rel. Moles | g/batch |
|---|---|---|
| Zinc Oxide | 1.8852 | 153.40 |
| Silicic Acid (approx. 87% $SiO_2$) | 1.000 | 69.35 |
| $MnCO_3$ (approx. 47% Mn) | 0.1147 | 13.34 |
| $NH_4Cl$ | 0.0221 | 1.180 |

These raw materials were thoroughly blended and fired in covered alumina crucibles in a furnace programmed to ramp from 700 ° C to 1250 ° C within 30 minutes, hold at 1250 ° C for 2-3 hours, and ramp down to 700 ° C in 60 minutes.

The fired material was then subjected to a mill/wash treatment where the material was ball milled in a weak citric acid solution (0.2% citric acid ($HO(CH_2CO_2H)_2CO_2H$) per unit of phosphor powder) for 30 minutes to 1 hour. The mill/washed material was then dewatered and dried.

EXAMPLE II

This example is directed to the preparation of improved manganese-activated zinc orthosilicate, as represented by Sample B in Table II, including employing $WO_3$ and $NH_4Cl$ as the only ammonium halide addition to the starting formulation.

The following starting materials were used in the present example. The relative mole amounts (i.e., the moles per formula unit) and corresponding numbers of grams per batch for each of the starting materials are as follows:

| | Rel. Moles | g/batch |
|---|---|---|
| Zinc Oxide | 1.8852 | 153.40 |
| Silicic Acid (approx. 87% $SiO_2$) | 1.0000 | 69.35 |
| $MnCO_3$ (approx. 47% Mn) | 0.1147 | 13.34 |
| $NH_4Cl$ | 0.0221 | 1.180 |
| $WO_3$ | 0.0011 | 0.255 |

These materials were blended, fired and mill/washed in a manner similar to the procedure presented in Example I.

EXAMPLE III

This example is directed to the preparation of improved manganese-activated zinc orthosilicate as represented by Sample D in Table II involving $WO_3$, and employing both $NH_4Cl$ and $NH_4F$ as the ammonium halide additions to the starting formulation.

The following starting materials were used in the present example. The relative mole amounts (i.e., the moles per formula unit) and corresponding numbers of grams per batch for each of the starting materials are as follows:

| | Rel. Moles | g/batch |
|---|---|---|
| Zinc Oxide | 1.8852 | 153.40 |
| Silicic Acid (approx. 87% $SiO_2$) | 1.000 | 69.35 |
| $MnCO_3$ (approx. 47% Mn) | 0.1147 | 13.34 |
| $NH_4Cl$ | 0.0199 | 1.062 |
| $NH_4F$ | 0.0032 | 0.118 |
| $WO_3$ | 0.0011 | 0.255 |

These materials were blended, fired and mill/washed in a manner similar to the procedure presented in Example I.

EXAMPLE IV

This example is directed to the preparation of improved manganese-activated zinc orthosilicate similar to Sample D in Table II, involving $WO_3$, $NH_4Cl$ and $NH_4F$, with the exception that the $NH_4Cl$ addition is approximately doubled to accommodate larger scale crucibles and furnace equipment.

The following starting materials were used in the present example. The relative mole amounts (i.e., the moles per formula unit) and corresponding numbers of kilograms per batch for each of the starting materials are as follows:

| | Rel. Moles | kg/batch |
|---|---|---|
| Zinc Oxide | 1.8852 | 30.68 |
| Silicic Acid (approx. 87% $SiO_2$) | 1.000 | 13.81 |
| $MnCO_3$ (approx. 47% Mn) | 0.1147 | 2.68 |
| $NH_4Cl$ | 0.0438 | 9.469 |
| $NH_4F$ | 0.0038 | 0.282 |
| $WO_3$ | 0.0011 | 0.054 |

These materials were blended, fired, and mill/washed in a manner similar to the procedure presented in Example I, except that the formulation is designed for larger scale firing procedures as, for example, a continuous furnace where the temperature time profile is analogous to the temperature ramp program indicated in Examples I, II and III.

A critical part of the phosphor preparation procedure is the citric acid mill/wash step. Although the overall reaction mechanism is designed to achieve essentially complete $Mn^{++}$ incorporation, trace amounts of unreacted manganese may persist. The mill/wash procedure is designed to dissolve and sequester any unreacted manganese which could contribute to discoloration of the phosphor and lower emission if not removed. In addition, the mill/wash step is designed to help deaggregate particle clusters and reduce the

material to its fundamental particle size. A preferred concentration range for citric acid for use in the mill/wash is from 0.2 to 0.4 weight percent per unit of phosphor powder.

Preferably, the method of preparation further includes the steps of:

rinsing the citric acid washed phosphor with ammonium hydroxide;

drying the rinsed phosphor; and

sieving the dried material through, for example, a screen, having a mesh in the range of from 200 to 400.

The advantages derived from the incorporation of $WO_3$ in combination with the acid mill wash is clearly shown by the results shown in Table III. Table III compares lamp test data, phosphor texture and particle size for a phosphor prepared from zinc oxide, silicic acid (approx 87% $SiO_2$), and manganese (II) carbonate in the following relative mole amounts of 1.8852, 1.0000, 0.1147, and 0.0221, respectively. In samples G and I, which contained tungsten, tungsten is added in the relative mole amount of 0.0011 moles. The starting material for samples G-J were blended and fired in a manner similar to the blending and firing steps described in Example I, and the fired material was suspended in a citric acid solution and gently agitated therein. Samples I and J were further processed via the citric acid mill wash step as described in Example I.

TABLE III

| SAMPLE | W | FSSS | TEXTURE | LUMENS AT 0 HOURS |
|---|---|---|---|---|
| G | YES | 6.0 | POOR | -- |
| H | NO | 5.2 | POOR | 3962 |
| I | YES | 5.2 | EXCELLENT | 5015 |
| J | NO | 5.0 | EXCELLENT | 4301 |

As used to describe texture in Table III, "poor" means an unacceptable mottled and/or spotty phosphor coating in a fluorescent lamp and "excellent" means an acceptable smooth, essentially blemish-free coating in a fluorescent lamp.

Individually coated phosphor particles of the substantially stoichiometric manganese-activated zinc orthosilicate phosphor, in accordance with the present invention have a continuous, i.e., nonparticulate; conformal; noncrystalline coating of aluminum oxide surrounding the outer surface of each phosphor particle. The coating substantially completely covers the outer surface of each coated particle. The thickness of the coating should be selected such that the performance of the phosphor is enhanced. The aluminum oxide coating is at least 90 Angstroms and up to 300 Angstroms (9 to 30 nanometres), preferably the coating thickness is from 100 to 300 Angstroms (10 to 30 nanometres).

The individually and continuously coated phosphor particles of the present invention are prepared by depositing a continuous, nonparticulate; conformal, aluminum oxide coating having the above thickness on the outer surface of the individual phosphor particles. Such coating is applied by coating methods such as, for example, chemical vapor deposition or preferably chemical vapor deposition in a fluidized bed. Most preferably the continuously coated individual phosphor particles are prepared by the method described in U.S.-A-4,585,673, entitled "Method for Coating Phosphor Particles" by A. Gary Sigai, which issued on 29 April 1986, which is hereby incorporated herein by reference.

The following Example is given to enable those skilled in this art to more clearly understand and practice the present invention. The Example should not be considered as a limitation upon the scope of the invention but merely as being illustrative and representative thereof.

EXAMPLE V

A phosphor similar to that prepared and described in Example III was coated with a nonparticulate, conformal, continuous coating of aluminum oxide using the coating method of U.S.-A-4,585,673. Prior to coating, the phosphor was admixed with an Aluminum Oxide C fluidizing aid (manufactured by DeGussa, Inc.). The admixture contained 0.05 weight percent fluidizing aid with respect to the phosphor. Two hundred sixty grams of the admixture were loaded into the reactor. The coating method parameters were:

| | |
|---|---|
| Carrier Gas ($N_2$) | 500 cc/mm |
| Alkyl bubbler flow ($N_2$) | 150 cc/mm |
| Oxygen flow | 500 cc/mm |
| Oxygen Carrier ($N_2$) | 50 cc/mm |
| Hot zone (Highest temperature) | 500 ° C |

The coating precursor material was trimethyl aluminum. The calculated aluminum oxide ($Al_2O_3$) coating thickness was 100 Angstroms. Preferred coating thicknesses are from 100 to 300 Angstroms. The surface area of the uncoated phosphor was 0.39 meter$^2$/gram, which is within the preferred range of 0.31-0.39 meter$^2$/gram. High resolution SEM of coated phosphor particles shows that the aluminum oxide coating is conformal. The coating growth was enhanced where fluidizing aid particles had adhered to the phosphor particle surface during fluidizing and the coating process. Auger analysis confirmed complete coverage of the surface of the individual phosphor particles with the continuous aluminum oxide coating, within the limits of analysis (99.8%), based on the attenuation of the peak-to-peak height of the cations of the phosphor substrate.

"Continuous", as used herein to describe the aluminum oxide coating herein, means nonparticulate, i.e., the aluminum oxide coating surrounding each phosphor particle does not consist of individual aluminum oxide particles.

The key features of the aluminum oxide coated phosphor particles of the present invention are: (1) the continuous, or nonparticulate, nature of the coating on each particle; (2) the conformal nature of the coating on each particle, replicating submicron features found naturally occurring on the uncoated phosphor particles; and (3) that each phosphor particle is individually coated.

These key features of the coated phosphor particle of the present invention are established and/or supported by Scanning Electron Microscopy (SEM), Auger analysis, reflection electron diffraction techniques, and BET measurements.

Scanning electron microscopy of the coated particles shows that the particles are individually coated; that the aluminum oxide coating on the phosphor particles is continuous and does not consist of aluminum oxide particles; and that the coating is conformal, replicating the submicron features of the underlying phosphor particle.

Auger analysis indicates that the coating provides substantially complete coverage of the outer surface of the phosphor particle.

Reflection electron diffraction shows the aluminum oxide coating to be noncrystalline, i.e., amorphous.

BET measurements support the conformal and continuous nature of the aluminum oxide coating to the extent the surface area of the coated phosphor is not appreciably changed when compared to the surface area of the uncoated phosphor. If the coating were particulate in nature, the surface area of the coated phosphor would be significantly increased. BET measurements also support that the phosphor particles are individually coated.

A fluorescent lamp in accordance with the present invention comprises a vitreous envelope having electrodes sealed into its ends, a fill of inert gas at low pressure, a small quantity of mercury, and a coating on the inner surface of the vitreous envelope. The coating comprises one or more layers of phosphor. Each layer of phosphor applied to the envelope contains at least one phosphor component. A phosphor which contains more than one phosphor component is more commonly referred to as a phosphor blend. At least one of the phosphor layers applied to the lamp envelope has a phosphor component comprising individually and continuously coated particles of the substantially stoichiometric manganese-activated zinc orthosilicate phosphor The coated envelope is then processed into a finished lamp according to known techniques. In those lamps containing more than one phosphor layer, a layer containing the individually and continuously coated phosphor particles is preferably the last layer of phosphor applied to the lamp envelope, i.e., the layer directly adjacent to arc generating medium within the lamp.

As used herein, the term "fluorescent lamp" refers to any lamp containing a phosphor excited to fluorescence by ultra-violet radiation, regardless of configuration.

Referring now to the drawing of FIGURE 1 there is shown with greater particularity one example of a fluorescent lamp 24 comprising a tubular, hermetically sealed, glass envelope 25. Electrodes 26 and 27 are sealed in the ends of envelope 25. Suitable terminals 28 and 29 are connected to the electrodes 26 and 27 and project from envelope 25. An arc generating and sustaining medium such as one or more inert gases and mercury vapor is included within envelope 25.

A coating 30 is applied to the inside surface of envelope 25. The coating 30 includes a phosphor layer comprising the coated phosphor particles of the present invention.

The coated phosphor particles of the present invention were incorporated into a 40 Watt T12 fluorescent lamp without conventional "milling", using wet-sieving techniques and an organic suspension system. The phosphor coating was applied to the inner surface of the lamp envelope and the lamp was otherwise processed using conventional lamp-processing techniques.

FIGURE 2 graphically compares the lumen output for three 40 Watt T12 fluorescent lamps as a function of hours of lamp operation. Curve A corresponds to the performance of a lamp in accordance with the present invention, having a phosphor coating of substantially stoichiometric manganese-activated zinc orthosilicate phosphor, the individual particles of which are substantially completely coated with a nonparticulate, noncrystalline, conformal continuous aluminum oxide coating, similar to the phosphor prepared and described in Example III and coated in Example V. Curve B presents data for a lamp wherein the phosphor coating comprises uncoated substantially stoichiometric manganese-activated zinc orthosilicate phosphor, similar to the phosphor prepared and described in Example III. Curve C is data for a fluorescent lamp having a coating of standard commercial willemite phosphor (No. 2282, obtained from the Chemical and Metallurgical Division of GTE Products Corporation, Towanda, Pennsylvania) with an $Sb_2O_3$ additive which had been added to the phosphor slurry during lamp fabrication. All the lamps were evaluated at the same time in the same test series. The lamp test data for the coated phosphor of the present invention show a dramatically improved performance over the uncoated phosphor and standard commercial willemite.

Table IV (below) tabulates data for a test series comparing the performance of Phosphor No. 2285 (manufactured by GTE Products Corporation, Towanda, Pennsylvania) (hereinafter referred to as Lamp 1); Phosphor 2285, the particles of which have been individually coated with a continuous aluminum oxide coating (by a method similar to that of Example of V) (hereinafter referred to as Lamp 2); substantially stoichiometric manganese-activated zinc orthosilicate phosphor (similar to that of Example III) (hereinafter referred to as Lamp 3); and substantially stoichiometric manganese-activated zinc orthosilicate phosphor (similar to that of Example III) the particles of which have been individually coated with a continuous aluminum oxide coating (by a method similar to Example V) (hereinafter referred to as Lamp 4). The lamps used in the test series were 40 Watt T12 fluorescent lamps.

TABLE IV

LUMEN OUTPUT

| SAMPLE | 0 HOURS | 100 HOURS | 500 HOURS | 1000 HOURS | 2000 HOURS | 5000 HOURS | % MAINT. 100-5000 | 8000 HOURS | % MAINT. 100-8000 |
|---|---|---|---|---|---|---|---|---|---|
| LAMP 1 | 4745 | 4296 | 3634 | 3181 | 2784 | 2224 | 51.8 | * | * |
| LAMP 2 | 4696 | 4618 | 4558 | 4696 | 4415 | 4099 | 88.8 | 3933 | 85.2 |
| LAMP 3 | 4951 | 4554 | 3786 | 3283 | 2744 | 2140 | 47.0 | * | * |
| LAMP 4 | 5134 | 5040 | 4969 | 4860 | 4780 | 4498 | 89.2 | 4256 | 84.4 |

Lamp 4, representative of a lamp in accordance with the present invention, provides a lamp with excellent maintenance characteristics and dramatically enhanced lumen output.

The coated phosphor particles of the present invention are particularly well-suited for use in a white-emitting phosphor blend. Such blends are used in fluorescent lamps. The white-emitting phosphor blend of the present invention comprises a green-emitting phosphor component, the green-emitting phosphor component comprising particles of manganese activated zinc orthosilicate phosphor having the empirical formula:

$$Zn_{(2.00-x-y)}Mn_xSiO_{(4.00-y)}(WO_3)_z$$

wherein:

$0.04 \leqq x \leqq 0.15$;
$0 \leqq y \leqq 0.05$; and
$0 \leqq z \leqq 0.002$,

the manganese-activated zinc orthosilicate phosphor particles being individually coated with a continuous coating of aluminum oxide.

As used herein, white as used to describe the light from a "white-emitting" phosphor blend refers to light falling within the white region of the CIE 1976 UCS Chromaticity Diagram, the approximate center of such white region having an Equal Energy Point with the coordinates u' = 0.2105 and v' = 0.4737. The CIE 1976 UCS Chromaticity Diagram is shown in FIGURE 3.

In preferred embodiments, the white light output of the white-emitting blend of the present invention falls on or close to the Black Body Locus. The Black Body Locus 40 is shown in FIGURE 3. In most preferred embodiments, the white light output is at or near the Equal Energy point E, shown in FIGURE 3.

In one embodiment of the white-emitting phosphor blend of the present invention, the blend includes the above-described green-emitting component and a red-emitting phosphor component, such as, for example, europium activated yttrium oxide. This two-component white-emitting phosphor blend of the present invention is used in high loaded fluorescent lamps, such as a T4 lamp, where the mercury discharge itself provides the blue component of the light to provide white light. The two-component white-emitting phosphor blend of the present invention comprises from 55 to 75 weight percent of a red-emitting phosphor component and from 25 to 45 weight percent of the above-described green-emitting component.

In accordance with another embodiment of the white-emitting blend of the present invention, there is provided a white-emitting tri-phosphor blend which includes a green-emitting phosphor component comprising the substantially stoichiometric manganese-activated zinc orthosilicate phosphor having the empirical formula set forth above, the individual particles of which have been coated with a continuous and conformal aluminum oxide coating. Such blend is less expensive than the tri-phosphor blend heretofore used in commercially available lamps. Preferably the triphosphor blend of the present invention is used in a two-coat fluorescent lamp, wherein a further advantage is realized. In two-coat lamps, a relatively inexpensive phosphor, such as, for example, a halophosphate phosphor, is used as the first phosphor layer and a second high-lumen phosphor layer is applied over the first phosphor layer. The second layer, or coat, is typically a blend of expensive narrow-band red, green, and blue-emitting phosphors (tri-phosphors) which give the desirable qualities of high brightness and excellent color rendition to the lamp. The amount of the tri-phosphor blend applied is generally between about 10% to 50% of the total combined phosphor weight of the two coats. Two-coat lamps which include the blend of the present invention as the second layer exhibit increased CRI (Color Rendition Index) values when compared with lamps made with a narrow-band expensive green-emitting phosphor component in the second layer of phosphor.

A series of lamp tests was conducted to compare the tri-phosphor blend of the present invention with the tri-phosphor blend which uses an expensive narrow-band, green-emitting rare-earth phosphor. The tests were conducted using fluorescent lamps of the configuration shown in FIGURE 1. The sealed tube was filled with an inert gas at a low pressure (about 2 torr) and a quantity of mercury sufficient to provide a low vapor pressure of six microns during operation. The interior of the glass envelope was coated with a first layer of a relatively inexpensive phosphor.

Two different systems were utilized in fabricating the lamps. In the first, a phosphor coating suspension was prepared by dispersing the phosphor particles in a water-base system employing polyethylene oxide and hydroxyethyl cellulose as the binders, with water as the solvent. The phosphor suspension was applied by known techniques, e.g., the phosphor suspension was caused to flow down the inner surface of the bulb and the water was evaporated leaving the binder and phosphor particles adhered to the bulb wall.

In the second system, the phosphor suspension was prepared by dispersing the phosphor particles in an organic base system with ethyl cellulose as the binder and xylol solvent. The phosphor suspension was applied to the bulb in the same manner used with the aqueous-base system.

The first phosphor layer was then baked to remove the organic components of the binder prior to overcoating with a second phosphor layer comprising the tri-phosphor blend of the present invention. The tri-phosphor blend included a narrow-band red and blue-emitting phosphor and substantially stoichiometric manganese-activated zinc orthosilicate phosphor, the individual particles of which have a continuous,

conformal aluminum oxide coating thereon, as the green-emitting phosphor. The green-emitting component was similar to the phosphor prepared and described in Example III and coated by a method similar to that described in Example V. The two narrow-band phosphors used in the present test series were yttrium oxide activated by trivalent europium and having a peak emission at 611 nm and barium magnesium aluminate activated by divalent europium and having a peak emission at 455 nm.

The second phosphor layer comprising the blend of the present invention was applied from an organic base suspension by allowing the coating to flow down over the first phosphor layer until the phosphor coating drained from the bottom of the bulb indicating the coverage of the phosphor layer was complete. The double phosphor coated bulbs were then baked and processed into fluorescent lamps by conventional lamp manufacturing techniques.

Control lamps were fabricated by identical techniques. The control lamps, however, included a tri-phosphor blend having cerium terbium magnesium aluminate phosphor as the green-emitting phosphor component. The red-emitting and blue-emitting phosphor components of the blend were $Eu^{3+}$-activated yttrium oxide and $Eu^{2+}$-activated barium magnesium aluminate, respectively.

Two different lamp types were evaluated with a second layer comprising the white-emitting tri-phosphor blend of the present invention, with control lamps as described above. The results are summarized in Tables V and VI. In these Tables, comparisons have been made for light output (expressed in lumens), lumen maintenance, and CRI values.

The lamps used to obtain the data in Table V employed a first layer comprising 89 weight percent cool white halophosphate phosphor and about 11 weight percent yellow halophosphate phosphor (Type 4381 manufactured by GTE Products Corporation, Towanda, Pennsylvania). The first layer was applied to the lamps of Table V using a water-base system. The lamps used to obtain the data in Table VI employed a first layer comprising warm white halophosphate phosphor. An organic-base system was used to apply the first layer to the lamps of Table VI.

The tests were run by photometering the lamps for light output in a standard photometric sphere, both initially and at the stated times. Lamp color values were obtained by spectral power distribution (SPD) measurements. (The lamps were 40 T12 fluorescent lamps.)

The objective of the test in Table V was to determine the effect of replacing the narrow-band green emitting magnesium aluminate phosphor with the broader-band coated green phosphor of the present invention in the tri-phosphor blend for double coated lamps. The lamps of Table V had a tri-phosphor weight in the second layer of 10% of the total phosphor in the two layers. The lamps were fabricated to obtain the same x and y color coordinates and color temperature for both the test and control by adjusting the tri-phosphor blend composition. The results show a substantial improvement in CRI of 6 units for lamps including the blend of the present invention over the control lamps at approximately the same tri-phosphor weights in the second layers. Lumens and lumen maintenance differences were slight between the two test groups.

In another example reported in Table VI, lamps were prepared in a similar manner as described for the lamps of Table V, except that the tri-phosphor weight in the second layer was 35% to 40% of the total phosphor in both layers. The results again show the beneficial effect of the present invention based on the higher CRI value of 86.0 in comparison to the control CRI of 77.1. This was accomplished without adversely affecting the lumens and lumen maintenance initially and after 1,000 hours of lamp operation.

## TABLE V

| COMPOSITION SECOND LAYER TRI-PHOSPHOR* | TRI-PHOSPHOR WEIGHT | COLOR MEASUREMENTS: COLOR COORDINATES X | COLOR COORDINATES Y | COLOR TEMP. | CRI |
|---|---|---|---|---|---|
| CONTROL | 0.73 GRAMS | .383 | .389 | 3921°K | 71.9 |
| 48.6% RED - $Y_2O_3$:EU | | | | | |
| 40.4% GREEN - (CE, TB) MG ALO:CE:TB | | | | | |
| 11.0% BLUE - BA MG ALO:EU | | | | | |
| TEST | 0.76 GRAMS | .383 | .388 | 3928°K | 78.2 |
| 49.5% RED - $Y_2O_3$:EU | | | | | |
| 36.5% GREEN - $ZN_2$ $SIO_4$:MN (CVD $AL_2O_3$ COATED) | | | | | |
| 14.0% BLUE - BA MG ALO:EU | | | | | |

### PHOTOMETRIC RESULTS

| | LUMENS 0 HOUR | LUMENS LOO HOUR | LUMENS L,000 HOURS | LUMEN MAINTENANCE % LOO - L,000 HOURS |
|---|---|---|---|---|
| CONTROL | 2930 | 2840 | 2744 | 96.6 |
| TEST | 2864 | 2787 | 2658 | 95.4 |

* LAMP TYPE: 40T12 LITE WHITE DELUXE SUPER SAVER 34

TABLE VI

| COMPOSITION-SECOND LAYER TRI-PHOSPHOR* | TRI-PHOSPHOR WEIGHT | COLOR MEASUREMENTS: COLOR COORDINATES X | Y | COLOR TEMP. | CRI |
|---|---|---|---|---|---|
| CONTROL | 1.95 GRAMS | .441 | .411 | 2900°K | 77.1 |
| 64.1% RED - $Y_2O_3$:EU | | | | | |
| 33.3% GREEN - (CE, TB) MG ALO:CE;TB | | | | | |
| 2.6% BLUE - BA MG ALO:EU | | | | | |
| TEST | 1.73 GRAMS | .437 | .411 | 2976°K | 86.0 |
| 65.3% RRD - $Y_2O_3$:EU | | | | | |
| 31.4% GREEN - $ZN_2$ $SIO_4$:MN (CVD $AL_2O_3$ COATED) | | | | | |
| 3.3% BLUE - BA MG ALO:EU | | | | | |

PHOTOMETRIC RESULTS

| | LUMENS 0 HOUR | LUMENS 100 HOUR | LUMENS 1,000 HOURS | LUMEN MAINTENANCE % 100 - 1,000 HOURS |
|---|---|---|---|---|
| CONTROL | 3494 | 3389 | 3312 | 97.7 |
| TEST | 3452 | 3360 | 3297 | 98.1 |

* LAMP TYPE: 40T12 3K° ROYAL WHITE

These results clearly show the substantial improvement in CRI provided by using the blend of the present invention in fluorescent lamps.

Moreover, the invention also provides a substantial phosphor cost savings in the above examples since the cost of the green magnesium aluminate phosphor is about 15 times greater than the coated phosphor of the present invention. Since the green emitting phosphor component comprises 30% to 40% of the tri-phosphor blend, it is evident that fluorescent lamps will benefit greatly from the use of the coated phosphor of the present invention by permitting a lamp price that finds more acceptance in the marketplace.

While the fluorescent lamp type used in the above-described lamp tests was 40T12, it will be appreciated by those of ordinary skill in the art that fluorescent lamps having different diameters, loadings, wattages and voltages can also be used in performing and obtaining the benefits and advantages of the present invention.

## Claims

1. A manganese-activated zinc orthosilicate phosphor particle
**characterized by**
the empirical formula:

$$Zn_{(2.00-x-y)}Mn_xSiO_{(4.00-y)}(WO_3)_z$$

wherein $0.04 \leqq x \leqq 0.15$; $0 \leqq y \leqq 0.05$; $0 \leqq z \leqq 0.002$

and having a continuous nonparticulate aluminum oxide coating surrounding its outer surface, said aluminum oxide coating having a thickness of at least 90 Angstroms up to 300 Angstrom (9 to 30 nanometers)

2. The phosphor particle of Claim 1
**characterized in that**

x is from 0.11 to 0.12;
y is from 0 to 0.03; and
z is from 0 to 0.002.

3. The phosphor particle of Claim 1
**characterized in that**
said phosphor has the empirical formula:

$$Zn_{1.89}Mn_{0.11}SiO_4(WO_3)_{0.001}.$$

4. The phosphor particle of any of the Claim 1 or 2
**characterized in that**
said aluminum oxide coating has a thickness in the range of 100 to 300 Angstroms (10 to 30 nanometers)

5. The phosphor particle of any of the Claims 1 to 4
**characterized in that**
said aluminum oxide coating has a thickness of 100 Angstroms (10 nanometers)

6. A white-emitting phosphor blend comprising a green-emitting phosphor component, said green-emitting phosphor component comprising particles of manganese-activated zinc orthosilicate phosphor
**characterized by**
the empirical formula:

$$Zn_{(2.00-x-y)}Mn_xSiO_{(4.00-y)}(WO_3)_z$$

wherein $0.04 \leqq x \leqq 0.15$; $0 \leqq y \leqq 0.05$; $0 \leqq z \leqq 0.002$, said particles of said manganese-activated zinc orthosilicate phosphor being individually coated with a continuous nonparticulate aluminum oxide coating, said aluminum oxide coating having a thickness of at least 90 Angstroms up to 300 Angstrom. (9 to 30 nanometers)

7. The phosphor blend of Claim 6
**characterized in that**
said phosphor particle has the features of any of the Claims 2 to 5.

8. The phosphor blend of Claim 6 or 7
**characterized in that**
said phosphor blend further comprises a red-emitting phosphor component comprising europium-activated yttrium oxide.

9. The phosphor blend of Claim 8
**characterized in that**
said red-emitting phosphor component amounts from 55 to 75% by weight and said green-emitting phosphor component amounts from 25 to 45% by weight.

10. The phosphor blend of Claim 9
**characterized in that**
it further comprises a blue-emitting phosphor component comprising europium-activated barium magnesium aluminate.

11. The phosphor blend of Claim 10
**characterized in that**
said blue-emitting phosphor component amounts to 14% by weight, said red-emitting phosphor component amounts to 50% by weight and said green-emitting phosphor amounts to 37% by weight.

12. The phosphor blend of Claim 10
**characterized in that**
said blue-emitting phosphor component amounts to 3% by weight, said red-emitting phosphor component amounts to 65% by weight and said green-emitting phosphor amounts to 31% by weight.

13. A fluorescent lamp comprising a glass envelope (25) wherein the inner wall of said glass envelope (25) is coated with a coating (30) comprising one or more layers of phosphor, at least one of said phosphor layers is a first layer including a phosphor component which comprises particles, said particles being
**characterized by**
the features of any of the Claims 1 to 5.

14. A fluorescent lamp comprising a glass envelope (25) wherein the inner wall of said glass envelope (25) is coated with a coating (30) comprising one or more layers of phosphor, at least one of said phosphor layers is a first layer comprising a white-emitting phosphor blend, said blend being
**characterized by**
the features of any of the Claims 6 to 12.

15. The fluorescent lamp of Claim 13 or 14
**characterized in that**
a second phosphor layer is provided which comprises a calcium halophosphate phosphor coactivated by antimony and manganese and that said second phosphor layer is the layer closer to said inner wall of said glass envelope.

16. The fluorescent lamp of Claim 15
**characterized in that**
said first layer has a phosphor weight equal to 10 to 50% by weight of the total phosphor weight of said lamp.

17. The fluorescent lamp of Claim 15
**characterized in that**
said first phosphor layer has a phosphor weight of 10% by weight of the total phosphor weight of said lamp.

18. The fluorescent lamp of Claim 15
**characterized in that**
said first phosphor layer has a phosphor weight between 35 and 40% by weight of the total phosphor weight of said lamp.

**19.** A substantially stoichiometric manganese-activated zinc orthosilicate phosphor particle
**charaterized in that**
it comprises:

a zinc concentration from 54.06% to 57.60% by weight;

a silicon concentration from 12.60% to 12.93% by weight;

a managanese concentration from 0.98% to 3.79% by weight; and

a tungsten concentration from 0% to 0.169% by weight and that

said phosphor particle has a continuous nonparticulate aluminum oxide coating surrounding its outer surface,

said aluminum oxide coating has a thickness of at least 90 Angstroms up to 300 Angstrom. (9 to 30 nanometers)

**20.** The phosphor particle of Claim 19
**characterized in that**
said aluminum oxide coating has a thickness in the range of 100 to 300 Angstroms. (10 to 30 nanometers)

**21.** A white-emitting phosphor blend comprising a green-emitting phosphor component, said green-emitting phosphor component comprising substantially stoichiometric manganese-activated zinc orthosilicate phosphor particles
**characterized by**

a zinc concentration from 54.06% to 57.60% by weight;

a silicon concentration from 12.60% to 12.93% by weight;

a manganese concentration from 0.98% to 3.79% by weight; and

a tungsten concentration from 0% to 0.169% by weight, said manganese-activated zinc orthosilicate phosphor particles being individually coated with a continuous nonparticulate coating of aluminum oxide,

said aluminum oxide coating has a thickness of at least 90 Angstroms up to 300 Angstrom. (9 to 30 nanometers)

**22.** The white-emitting phosphor blend of Claim 21
**characterized in that**
said aluminum oxide coating has a thickness in the range of 100 to 300 Angstroms. (10 to 30 nanometers)

**23.** The white-emitting phosphor blend of Claim 21 or 22
**characterized in that**
said phosphor blend further comprises red-emitting phosphor component comprising europium-activated yttrium oxide.

**24.** The white-emitting phosphor blend of any of the Claims 21 to 23
**characterized in that**
said phosphor blend further comprises a blue-emitting phosphor component comprising europium-activated barium magnesium aluminate.

**25.** The white-emitting phosphor blend of any of the Claims 21 to 23
**characterized in that**

said blend comprises said red-emitting phosphor component in an amount from 55 to 75% by weight and said green-emitting phosphor component in an amount from 25 to 45% by weight.

**26.** The white-emitting phosphor blend of Claim 24
**characterized in that**
said blend comprises said blue-emitting phoshor component in an amount of 14% by weight; said red-emitting phosphor component in an amount of 50% by weight and said green-emitting phosphor component in an amount of 37% by weight.

**27.** The white-emitting phosphor blend of Claim 24
**characterized in that**
said blend comprises said blue-emitting phosphor component in an amount of 3% by weight; said red-emitting phosphor component in an amount of 65% by weight and said green-emitting phosphor component in an amount of 31% by weight.

**28.** A fluorescent lamp comprising a glass envelope (25) wherein the inner wall of said glass envelope (25) is coated with a coating (30) comprising one or more layers of phosphor, at least one of said phosphor layers including a phosphor component comprising particles
**characterized by**
the features of Claims 19 to 20.

**29.** A fluorescent lamp comprising a glass envelope (25) wherein the inner wall of said glass envelope (25) is coated with a coating (30) comprising one or more layers of phosphor, at least one of said phosphor layers being a white-emitting phosphor blend
**characterized by**
the features of any of the Claims 21 to 28.

**30.** Use of a phosphor particle according to any of the Claims 1 to 5 or 19 and 20 in a fluorescent lamp.

**31.** Use of a phosphor blend according to any of the Claims 6 to 12 or 21 to 27 in a fluorescent lamp.

**Patentansprüche**

**1.** Ein manganaktivierter Zinkorthosilikatphosphorpartikel
**gekennzeichent durch**,
die empirische Formel:

$Zn_{(2,00-x-y)}\ Mn_xSiO_{(4,00-y)}\ (WO_3)_z$,

wobei $0{,}04 \leqq x \leqq 0{,}15$; $0 \leqq y \leqq 0{,}05$; $0 \leqq z \leqq 0{,}002$

und durch eine gleichförmige, nicht aus Makroteilchen gebildete Aluminiumoxidbeschichtung, die dessen Außenfläche umgibt, wobei die Aluminiumoxidbeschichtung eine Dicke von wenigstens 90 bis 300 Angström ( 9 bis 30 Nanometer) aufweist.

**2.** Der Phosphorpartikel nach Anspruch 1,
**dadurch gekennzeichnet**,
daß

x zwischen 0,11 und 0,12;
y zwischen 0 und 0,03; und
z zwischen 0 und 0,002 ist.

**3.** Der Phosphorpartikel nach Anspruch 1,
**dadurch gekennzeichnet**,
daß der Phosphor die empirische Formel aufweist:

$Zn_{1,89}Mn_{0.11}SiO_4(WO_3)_{0,001}$.

4. Der Phosphorpartikel nach einem der Ansprüche 1 oder 2,
**dadurch gekennzeichnet**,
daß die Aluminiumoxidbeschichtung eine Dicke im Bereich von 100 bis 300 Angström (10 bis 30 Nanometern) aufweist.

5. Der Phosphorpartikel nach einem der Ansprüche 1 bis 4,
**dadurch gekennzeichnet**,
daß die Aluminiumoxidbeschichtung eine Dicke von 100 Angström (10 Nanometer) aufweist.

6. Eine weißemittierende Phosphormischung mit einer grünemittierenden Phosphorkomponente, wobei die grünemittierende Phosphorkomponente Partikel aus manganaktiviertem, Zinkorthosilikatphosphor enthält,
**gekennzeichnet durch**,
die empirische Formel:

$Zn_{(2,00-x-y)} Mn_xSiO_{(4,00-y)} (WO_3)_z$,

wobei $0,04 \leqq x \leqq 0,15$; $0 \leqq y \leqq 0,05$; $0 \leqq z \leqq 0,002$, und die Partikel des manganaktivierten Zinkorthosilikatphosphors individuell mit einer kontinuierlichen, nicht aus Makroteilchen gebildeten Aluminiumoxidbeschichtung beschichtet sind, wobei die Aluminiumoxidbeschichtung eine Dicke von wenigstens 90 bis 300 Angström (9 bis 30 Nanometer) aufweist.

7. Die Phosphormischung nach Anspruch 6,
**dadurch gekennzeichnet**,
daß der Phosphorpartikel die Merkmale eines der Ansprüche 2 bis 5 aufweist.

8. Die Phosphormischung nach Anspruch 6 oder 7,
**dadurch gekennzeichnet**,
daß die Phosphormischung weiterhin eine rotemittierende Phosphorkomponente mit einem europiumaktivierten Yttriumoxid aufweist.

9. Die Phosphormischung nach Anspruch 8,
**dadurch gekennzeichnet**,
daß die rotemittierende Phosphorkomponente 55 bis 75 Gewichtsprozent und die grünemittierende Phosphorkomponente 25 bis 45 Gewichtsprozent bildet.

10. Die Phosphormischung nach Anspruch 9,
**dadurch gekennzeichnet**,
daß sie weiterhin eine blauemittierende Phosphorkomponente mit einem europiumaktivierten Bariummagnesiumaluminat enthält.

11. Die Phosphormischung nach Anspruch 10,
**dadurch gekennzeichnet**,
daß die blauemittierende Phosphorkomponente 14 Gewichtsprozent, die rotemittierende Phosphorkomponente 50 Gewichtsprozent und die grünemittierende Phosphorkomponente 37 Gewichtsprozent bildet.

12. Die Phosphormischung nach Anspruch 10,
**dadurch gekennzeichnet**,
daß die blauemittierende Phosphorkomponente 3 Gewichtsprozent, die rotemittierende Phosphorkomponente 65 Gewichtsprozent und die grünemittierende Phosphorkomponente 31 Gewichtsprozent bildet.

13. Eine Fluoreszenzlampe mit einem Glaskolben (25), dessen innere Wand mit einer Beschichtung (30) beschichtet ist, welche eine oder mehrere Schichten von Phosphor aufweist, von denen wenigstens eine Phosphorschicht eine erste Schicht bildet, die eine Phosphorkomponente mit Partikeln enthält,
**dadurch gekennzeichnet**,
daß die Partikel die Merkmale eines der Ansprüche 1 bis 5 aufweisen.

**14.** Eine Fluoreszenzlampe mit einem Glaskolben (25), dessen innere Wand mit einer Beschichtung (30) beschichtet ist, welche wenigstens eine oder mehrere Phosphorschichten aufweist, von denen wenigstens eine Phosphorschicht eine erste Schicht mit einer weißemittierenden Phosphormischung ist,
**dadurch gekennzeichnet**,
daß die Mischung die Merkmale eines der Ansprüche 6 bis 12 aufweist.

**15.** Die Fluoreszenzlampe nach Anspruch 13 oder 14,
**dadurch gekennzeichnet**,
daß eine Zweite Phosphorschicht aufgetragen ist, die ein Kalziumhalophosphatphosphor enthält, welches durch Antimon und Mangan koaktiviert ist und daß die zweite Phosphorschicht die näher an der Innenwand des Glaskolbens liegende Schicht ist.

**16.** Die Fluoreszenzlampe nach Anspruch 15,
**dadurch gekennzeichnet**,
daß die erste Schicht einen Phosphoranteil gleich 10 bis 15 Gewichtsprozent des Gesamtphosphoranteils der Lampe enthält.

**17.** Die Fluoreszenzlampe nach Anspruch 15,
**dadurch gekennzeichnet**,
daß die erste Phosphorschicht einen Phosphoranteil von 10 Gewichtsprozent des Gesamtphosphoranteils der Lampe enthält.

**18.** Die Fluoreszenzlampe nach Anspruch 15,
**dadurch gekennzeichnet**,
daß die erste Phosphorschicht einen Phosphoranteil zwischen 35 und 40 Gewichtsprozent des Gesamtphosphoranteils der Lampe enthält.

**19.** Ein im wesentlichen stöchiometrischer, manganaktivierter Zinkorthosilikatphosphorpartikel,
**dadurch gekennzeichnet**,
daß er

Zink mit 54,06 bis 57,60 Gewichtsprozent,

Silicium mit 12,60 bis 12,93 Gewichtsprozent,

Mangan mit 0,98 bis 3,79 Gewichtsprozent und

Wolfram mit 0 bis 0,169 Gewichtsprozent enthält und bei der Phosphorpartikel eine kontinuierliche, nicht aus Makroteilchen gebildete Aluminiumoxidbeschichtung aufweist, die dessen äußere Oberfläche umgibt und wobei die Aluminiumoxidbeschichtung eine Dicke von wenigstens 90 bis 300 Angström (9 bis 30 Nanometer) aufweist.

**20.** Der Phosphorpartikel nach Anspruch 19,
**dadurch gekennzeichnet**,
daß die Aluminiumoxidbeschichtung eine Dicke im Bereich von 100 bis 300 Angström (10 bis 30 Nanometer) aufweist.

**21.** Eine weißemittierende Phosphormischung mit einer grünemittierenden Phosphorkomponente, wobei die grünemittierende Phosphorkomponente im wesentliche stöchiometrische, manganaktivierte Zinkorthosilikatphosphorpartikel enthält,
**gekennzeichnet durch**
eine Zinkkonzentration von 54,06 bis 57,60 Gewichtsprozent;

eine Sliziumkonzentration von 12,60 bis 12,93 Gewichtsprozent;

eine Mangankonzentration von 0,98 bis 3,79 Gewichtsprozent; und

eine Wolframkonzentration von 0 bis 0,169 Gewichtsprozent,

wobei die manganaktivierten Zinkorthosilikatphosphorpartikel individuell mit einer kontinuierlichen, nicht aus Makroteilchen gebildeten Beschichtung aus Aluminiumoxid versehen sind, welche eine Dicke von wenigstens 90 bis 300 Angström (9 bis 30 Nanometer) aufweist.

**22.** Die weißemittierende Phosphormischung nach Anspruch 21,
**dadurch gekennzeichnet**,
daß die Aluminiumoxidbeschichtung eine Dicke im Bereich von 100 bis 300 Angström (10 bis 30 Nanometer) aufweist.

**23.** Die weißemittierende Phosphormischung nach Anspruch 21 oder 22,
**dadurch gekennzeichnet**,
daß die Phosphormischung weiterhin eine rotemittierende Phosphorkomponente mit europiumaktivierten Yttriumoxid enthält.

**24.** Die weißemittierende Phosphormischung nach einem der Ansprüche 21 bis 23,
**dadurch gekennzeichnet**,
daß die Phosphormischung außerdem eine blauemittierende Phosphorkomponente mit einem europiumaktivierten Bariummagnesiumaluminat enthält.

**25.** Die weißemittierende Phosphormischung nach einem der Ansprüche 21 bis 23,
**dadurch gekennzeichnet**,
daß die Mischung eine rotemittierende Phosphorkomponente mit 55 bis 75 Gewichtsprozent und die grünemittierende Phosphorkomponente mit 25 bis 45 Gewichtsprozent hält.

**26.** Die weißemittierende Phosphormischung nach Anspruch 24,
**dadurch gekennzeichnet**,
daß die Mischung die blauemittierende Phosphorkomponente mit 14 Gewichtsprozent, die rotemittierende Phosphorkomponente mit 50 Gewichtsprozent und die grünemittierende Phosphorkomponente mit 37 Gewichtsprozent enthält.

**27.** Die weißemittierende Phosphormischung nach Anspruch 24,
**dadurch gekennzeichnet**,
daß die Mischung die blauemittierende Phosphorkomponente mit 3 Gewichtsprozent, die rotemittierende Phosphorkomponente mit 65 Gewichtsprozent und die grünemittierende Phosphorkomponente mit 31 Gewichtsprozent enthält.

**28.** Eine Fluoreszenzlampe mit einem Glaskolben (25), dessen innere Wand mit einer Beschichtung (30) beschichtet ist, welche eine oder mehrere Phosphorschichten aufweist, von denen wenigstens eine Phosphorschicht eine Phosphorkomponente aufweist,
**dadurch gekennzeichnet**,
daß die Partikel die Merkmale der Ansprüche 19 bis 20 aufweisen.

**29.** Eine Fluoreszenzlampe mit einem Glaskolben (25), dessen innere Wand mit einer Beschichtung (30) beschichtet ist, welche eine oder mehrere Phosphorschichten aufweist, von denen wenigstens eine Phosphorschicht eine weißemittierende Phosphormischung ist,
**gekennzeichnet durch**
die Merkmale von einem der Ansprüche 21 bis 28.

**30.** Verwendung eines Phosphorpartikels nach einem der Ansprüche 1 bis 5 oder 19 und 20 in einer Fluoreszenzlampe.

**31.** Verwendung einer Phospormischung nach einem der Ansprüche 6 bis 12 oder 21 bis 27 in einer Fluoreszenzlampe.

## Revendications

1. Particule de luminophore d'orthosilicate de zinc dope au manganèse **caractérisé par** la formule empirique :

$Zn_{(2,00-x-y)}Mn_xSiO_{(4,00-y)}(WO_3)_z$

dans laquelle 0,04 <= x <= 0,15; 0 <= y <= 0,05; 0 <= z <=0,002 et ayant un revétement continu d'alumine non-particulaire sur sa surface extérieure, le dit revètement d'alumine présentant une epaisseur comprise entre 90 et 300 Angströms (9 à 30 nanometres).

2. Particule de luminophore selon la revendication 1 caractérisé en ce que :
   x est compris entre 0.11 et 0.12
   y est compris entre 0 et 0.03; et
   z est compris entre 0 et 0.002.

3. Particule de luminophore selon la revendication 1 caractérisé en ce que le dit luminophore a la formule empirique :

$Zn_{1,89}Mn_{0,11}SiO_4(WO_3)_{0,001}$.

4. Particule de luminophore selon la revendication 1 ou 2 caractérisé en ce que le dit revètement d'alumine presente une epaisseur comprise entre 100 et 300 Angströms (10 et 30 nanometres).

5. Particule de luminophore selon l'une quelconque des revendications 1 à 4 caractérisé en se que le dit revétement d'alumine presente une épaisseur de 100 Angströms (10 nanometres).

6. Mélange de luminophores émettant dans le blanc, comprenant un composant de luminophore emettant dans le vert, le dit composant de luminophore émettant dans le vert comprenant des particules de luminophore d'orthosilicate de zinc dope au manganese, **caractérisé par** la formule empirique:

$Zn_{(2,00-x-y)}Mn_xSiO_{(4,00-y)}(WO_3)_z$

dans laquelle 0.04 <= x <= 0,15; 0 <= y <= 0.05; 0 <= z <=0.002; les dites particules du dit luminophore d'orthosilicate de zinc dope au manganese étant individuellement revétu d'un revètement continu d'alumine non-particulaire, le dit revêtement d'alumine presentant une epaisseur comprise entre 90 et 300 Angströms (9 à 30 nanomètres).

7. Mélange de lumonophores selon la revendication 6 caractérisé en ce que la dite particule de luminophore presente les particularités des revendications 2 à 5.

8. Mélange de lumonophores selon la revendication 6 ou 7 caractérisé en ce que le dit melange de lumonophores comprend, en outre, un composant de luminophore emettant dans le rouge comprenant un oxyde d'yttrium dope a l'europium.

9. Mélange de lumonophores selon la revendication 8 caractérise en ce qu'il comprend entre 55 et 75 % en poids du dit composant de luminophore émettant dans le rouge et entre 25 et 45 % en poids du dit composant de luminophore émettant dans le vert.

10. Mélange de lumonophores selon la revendication 9 caractérise en ce qu'il comprend, en outre, un composant de luminophore emettant dans le bleu comprenant un aluminate de magnesium-baryum dope a l'europium.

11. Mélange de lumonophores selon la revendication 10 caractérise en ce qu'il comprend 14 % en poids du dit composant de luminophore émettant dans le bleu, 50 % en poids du dit composant de luminophore émettant dans le rouge et 37 % en poids du dit composant de luminophore émettant dans le vert.

**12.** Melange de lumonophores selon la revendication 10 caractérisé en ce qu'il comprend 3 % en poids du dit composant de luminophore emettant dans le bleu, 65 % en poids du dit composant de luminophore émettant dans le rouge 65 % en poids, et 31 % en poids du dit composant de luminophore émettant dans le vert.

**13.** Lampe fluorescente comprenant une ampoule de verre (25) dans laquelle la paroi intérieure de la dite ampoule de verre (25) est revêtue d'un revêtement (30) comprenant une ou plusieurs couche(s) de luminophores, au moins une des dites couches de luminophores est une premiere couche incluant un composant de luminophore qui comprend des particules, les dites particules étant **caractérisées par** les particularites de l'une quelconque des revendications 1 à 5.

**14.** Lampe fluorescente comprenant une ampoule de verre (25) dans laquelle la paroi intérieure de la dite ampoule de verre (25) est revêtue d'un revêtement (30) comprenant une ou plusieurs couche(s) de luminophores, au moins une des dites couches de luminophores est une premiere couche incluant un melange de luminophores émettant dans le blanc, le dit mélange étant **caractérisé par** les particularités de l'une quelconque des revendications 6 à 12.

**15.** Lampe fluorescente selon la revendication 13 ou 14 caractérisée en ce qu'une deuxième couche de lumonophores comprenant un luminophore d'halophosphate de calcium dope a l'antimoine et au manganèse est prévue, et que la dite deuxième couche est la couche la plus proche de la dite paroi interne de la dite ampoule de verre.

**16.** Lampe fluorescente selon la revendication 15 caractérisée en ce que la dite premiere couche a un poids de luminophores compris entre 10 et 50 % en poids du poids total des luminophores de la dite lampe.

**17.** Lampe fluorescente selon la revendication 15 caractérisée en ce que la dite premiere couche de luminophores a un poids de luminophores égal à 10 % en poids du poids total des luminophores de la dite lampe.

**18.** Lampe fluorescente selon la revendication 15 caractérisée en ce que la dite première couche de luminophores a un poids de luminophores compris entre 35 et 40 % en poids du poids total des luminophores de la dite lampe.

**19.** Particule de luminophore d'orthosilicate de zinc dopé au manganèse substantiellement stoechiométrique caractérisée en ce qu'il comprend:

une concentration de zinc comprise entre 54,06 et 57,60 % en poids;
une concentration de silicium comprise entre 12,60 et 12,93 % en poids;
une concentration de manganese comprise entre 0,98 et 3,79 % en poids;

et une concentration de tungstène comprise entre 0 et 0,169 % en poids; et que

la dite particule de luminophore présente un revetement d'alumine continu non-particulaire entourant sa surface externe,

le dit revêtement d'alumine presente une epaisseur comprise entre 90 et 300 Angströms (9 à 30 nanometres).

**20.** Particule de luminophore selon la revendication 19 caractérisée en ce que le dit revêtement d'alumine présente une épaisseur comprise entre 100 et 300 Angströms (10 à 30 nanometres).

**21.** Mélange de luminophores émettant dans le blanc comprenant un composant de luminophore émettant dans le vert, le dit composant de luminophore émettant dans le vert comprenant des particules de luminophore d'orthosilicate de zinc dopé au manganese substantiellement stoechiométrique caractérise par:

une concentration de zinc comprise entre 54,06 et 57,60 % en poids;
une concentration de silicium comprise entre 12,60 et 12,93 % en poids;
une concentration de manganese comprise entre 0,98 et 3,79 % en poids;

et une concentration de tungstene comprise entre 0 et 0,169 % en poids;

les dites particules de luminophore d'orthosilicate de zinc dopé au manganèse presentant un revetement individuel d'alumine continu non-particulaire.

le dit revêtement d'alumine presentant une epaisseur comprise entre 90 et 300 Angströms (9 à 30 nanometres).

**22.** Mélange de luminophores émettant dans le blanc selon la revendication 21 caractérise en ce que le dit revétement d'alumine présente une epaisseur comprise entre 100 et 300 Angstöms (10 à 30 nanometres).

**23.** Mélange de luminophores emettant dans le blanc selon la revendication 21 ou 22 caractérise en ce que le dit melange de luminophores comprend, en outre, un composant de luminophore emettant dans le rouge comprenant un oxyde d'yttrium dope a l'europium.

**24.** Mélange de luminophores émettant dans le blanc selon l'une quelconque des revendications 21 à 23 caractérise en ce que le dit mélange de luminophores comprend, en outre, un composant de luminophore emettant dans le bleu comprenant un aluminate de magnesium-baryum dopé à l'europium.

**25.** Mélange de luminophores émettant dans le blanc selon l'une quelconque des revendications 21 à 23 caractérisé en ce que le dit melange comprend le dit composant de luminophore emettant dans le rouge en quantite comprise entre 55 et 75 % en poids et le dit composant de luminophore emettant dans le vert en quantite comprise entre 25 et 45 % en poids.

**26.** Mélange de luminophores émettant dans le blanc selon la revendication 24 caractérisé en ce que le dit mélange comprend 14 % en poids du dit composant de luminophore émettant dans le bleu, 50 % en poids de composant de luminophore emettant dans le rouge et 37 % en poids de composant de luminophore émettant dans le vert.

**27.** Mélange de luminophores émettant dans le blanc selon la revendication 24 caractérisé en ce que le dit mélange comprend 3 % en poids du dit composant de luminophore émettant dans le bleu, 65 % en poids du dit composant de luminophore émettant dans le rouge et 31 % en poids du dit composant de luminophore emettant dans le vert.

**28.** Lampe fluorescente comprenant une ampoule de verre (25) dans laquelle la paroi intérieure de la dite ampoule de verre (25) est revêtue d'un revêtement (30) comprenant une ou plusieurs couche(s) de luminophores, au moins une des dites couches de luminophores incluant un composant de luminophore comprenant des particules **caractérisées par** les particularités de l'une quelconque des revendications 19 à 20.

**29.** Lampe fluorescente comprenant une ampoule de verre (25) dans laquelle la paroi intérieure de la dite ampoule de verre (25) est revétue d'un revétement (30) comprenant une ou plusieurs couche(s) de luminophores, au moins une des dites couches de luminophores etant un mélange de luminophores émettant dans le blanc, le dit mélange etant **caractérisé par** les particularites de l'une quelconque des revendications 21 à 28.

**30.** Utilisation d'une particule de luminophore selon l'une quelconque des revendications 1 à 5 ou 19 et 20 dans une lampe fluorescente.

**31.** Utilisation d'un mélange de luminophores selon l'une quelconque des revendications 6 a 12 ou 21 à 27 dans une lampe fluorescente.

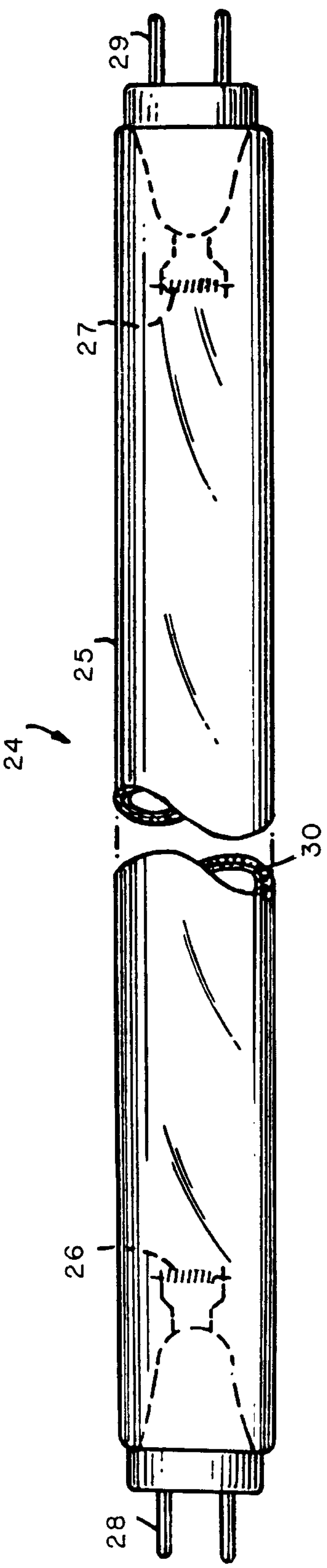


FIG. 1

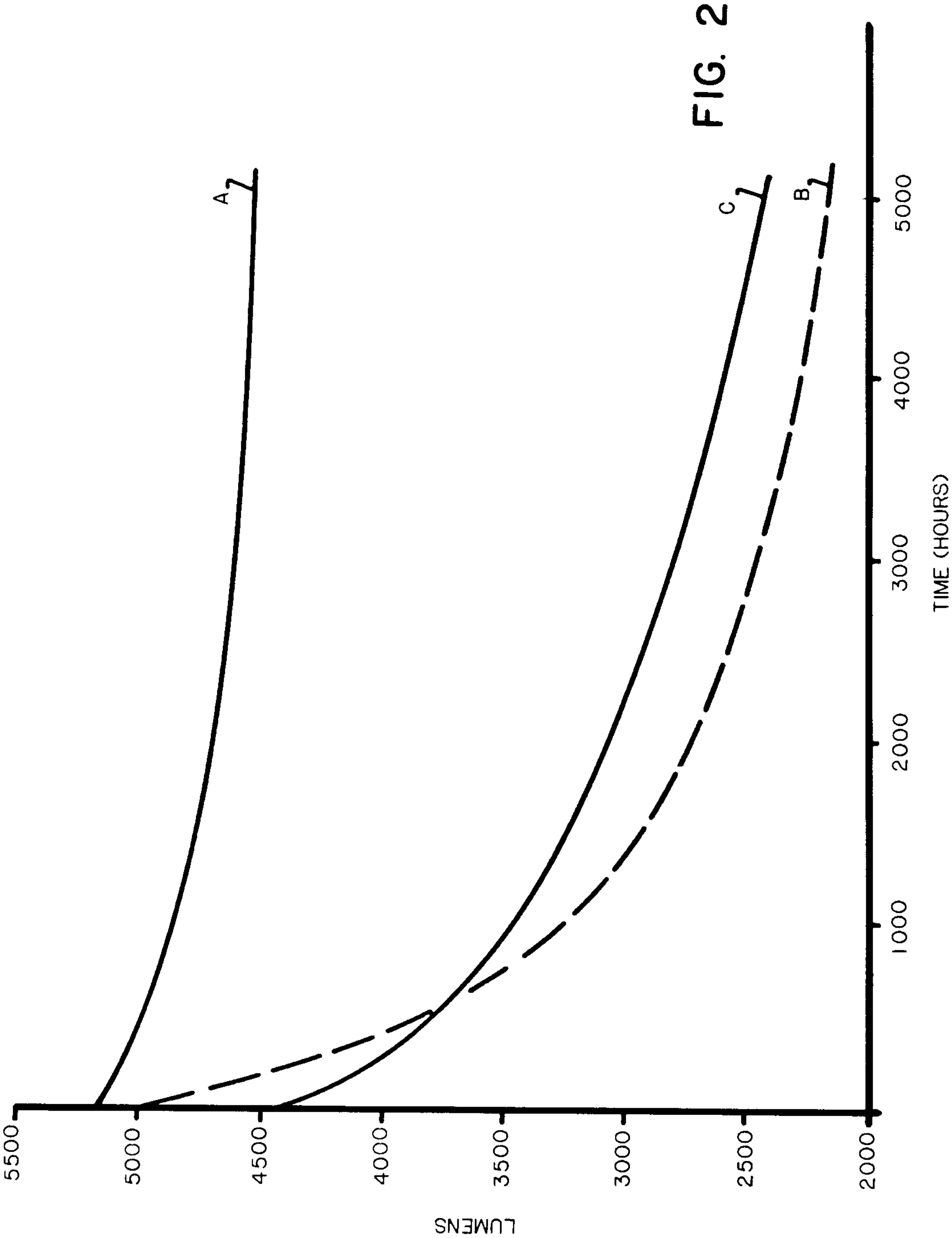
A
B
C
LUMENS
5500
5000
4500
4000
3500
3000
2500
2000
TIME (HOURS)
1000
2000
3000
4000
5000

FIG. 2

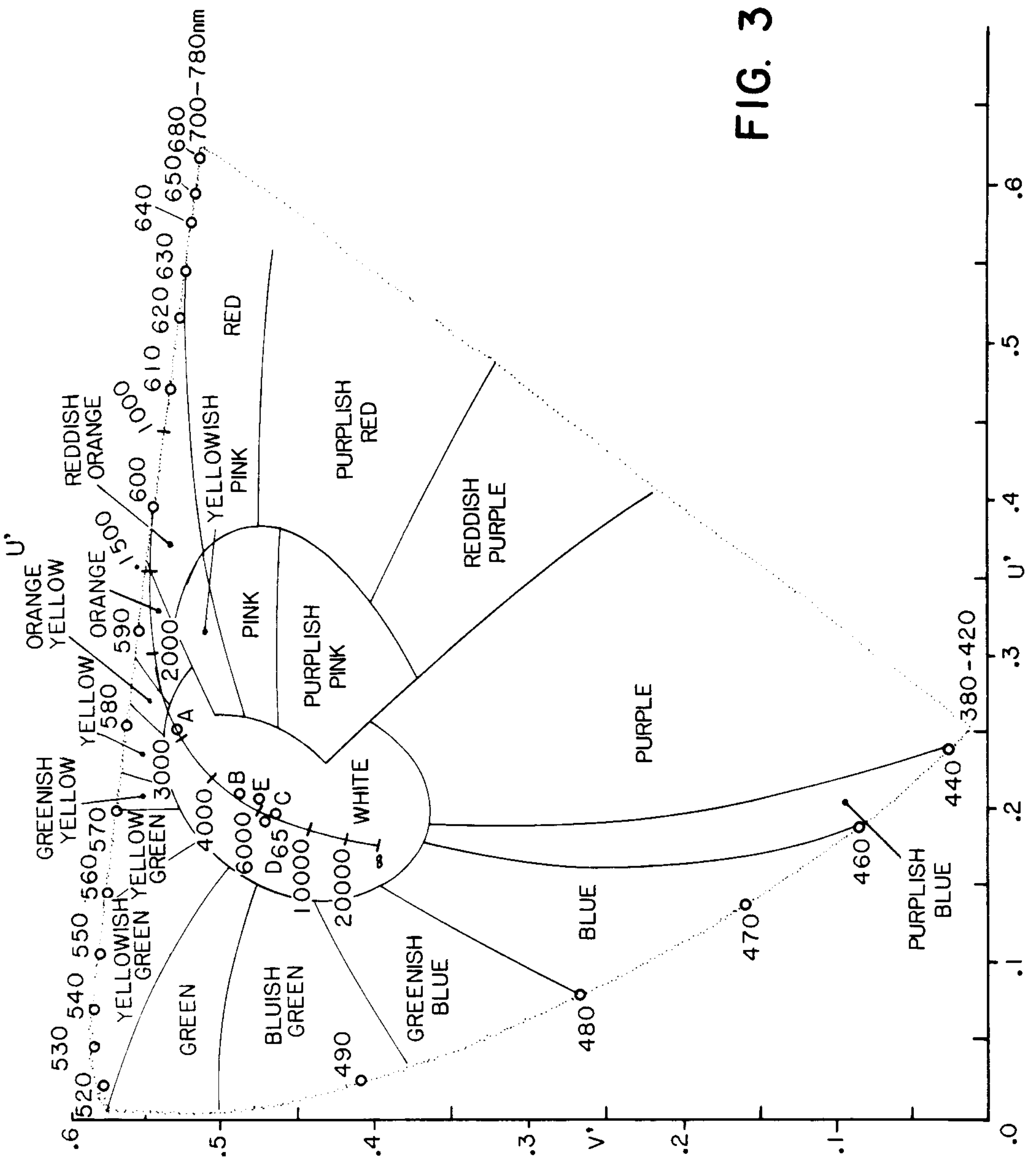
u'
v'
.0
.1
.2
.3
.4
.5
.6
520
530
540
550
560
570
580
590
600
610
620
630
640
650
680
700-780nm
490
480
470
460
440
380-420
1000
1500
2000
3000
4000
6000
10000
20000
∞
A
B
C
E
D65
GREEN
YELLOWISH GREEN
YELLOW GREEN
GREENISH YELLOW
YELLOW
ORANGE YELLOW
ORANGE
REDDISH ORANGE
YELLOWISH PINK
RED
PURPLISH RED
REDDISH PURPLE
PURPLE
PINK
PURPLISH PINK
WHITE
BLUISH GREEN
GREENISH BLUE
BLUE
PURPLISH BLUE
FIG. 3